# EUROPEAN PATENT APPLICATION

(11) **EP 4 664 654 A1**
(43) Date of publication of application: **17.12.2025**
(21) Application number: 24853148.5
(22) Date of filing: 28.02.2024
(51) Int. Cl.: H01M 50/46, H01M 4/62, H01M 6/00, H01M 10/04

(54) **BATTERY, TERMINAL APPARATUS, AND BATTERY MANUFACTURING METHOD**

(30) Priority: 17.08.2023 CN 202311035539
(71) Applicant: Honor Device Co., Ltd., Shenzhen, Guangdong 518040 (CN)
(72) Inventor: YU, Zhihao, Shenzhen, Guangdong 518040 (CN); WU, Xia, Shenzhen, Guangdong 518040 (CN); CUI, Houlei, Shenzhen, Guangdong 518040 (CN); LI, Wenwen, Shenzhen, Guangdong 518040 (CN)
(74) Representative: Gill Jennings & Every LLP
(86) International application number: PCT/CN2024/078960
(87) International publication number: WO 2025/035732

(57) **Abstract**

This application provides a battery, including a negative electrode plate and a separator. The negative electrode plate includes a negative active substance layer and a functional layer that are stacked. The functional layer includes Mg²⁺, where some of the Mg²⁺ is embedded in the negative active substance layer. The separator includes a base film and a coating layer located on a surface of the base film, and the coating layer bonds the base film and the functional layer. The coating layer includes a polymer material. The polymer material is coordination-crosslinked with at least some of the remaining Mg²⁺ in the functional layer. The polymer material in the coating layer performs a coordination crosslinking reaction with the Mg²⁺ in the functional layer, so as to effectively increase binding strength between the negative electrode plate and the separator, thereby helping prevent deformation of the battery during a cycle process. In addition, after ionization of the polymer material, ionic conductivity performance of the polymer material can be effectively improved, and internal resistance of the battery is reduced, thereby improving fast charging performance of the battery. This application further provides a terminal apparatus including a battery and a method for manufacturing a battery.

## Description

### CROSS-REFERENCE TO RELATED APPLICATIONS

This application claims priority to Chinese Patent Application No. 202311035539.6, filed with the China National Intellectual Property Administration on August 17, 2023 and entitled "BATTERY, TERMINAL APPARATUS, AND METHOD FOR MANUFACTURING BATTERY", which is incorporated herein by reference in its entirety.

### TECHNICAL FIELD

This application relates to the battery field, and in particular, to a battery, a terminal apparatus, and a method for manufacturing a battery.

### BACKGROUND

A battery is an important component of a terminal apparatus. With a user requirement for lightness, thinness, and long-term endurance of a terminal apparatus, a user has an increasingly high requirement for energy density and safety of a battery. An SEI film is formed in a negative electrode of a battery during an initial charging process. Formation of the SEI film consumes a relatively large amount of active lithium, and this part of lithium does not participate in an electrochemical cycle, which causes a decrease in an actual amount of active lithium. As a result, initial efficiency of the negative electrode is low, leading to a decrease in the energy density of the battery.

### SUMMARY

According to a first aspect, this application provides a battery, including a negative electrode plate and a separator. The negative electrode plate includes a negative active substance layer and a functional layer that are stacked. The functional layer includes Mg²⁺, where some of the Mg²⁺ is embedded in the negative active substance layer. The separator includes a base film and a coating layer located on a surface of the base film, and the coating layer bonds the base film and the functional layer. The coating layer includes a polymer material. The polymer material is coordination-crosslinked with at least some of the remaining Mg²⁺ in the functional layer.

In the foregoing design, the functional layer is disposed in the negative electrode plate to improve initial efficiency of a negative electrode. The polymer material has bonding performance and can achieve a bonding effect to some extent. In addition, the polymer material in the coating layer performs a coordination crosslinking reaction with the Mg²⁺ in the functional layer, so as to effectively increase binding strength between the negative electrode plate and the separator, thereby helping prevent deformation of the battery during a cycle process. In addition, after ionization of the polymer material, ionic conductivity performance of the polymer material can be effectively improved, and internal resistance of the battery is reduced, thereby helping improve fast charging performance of the battery.

In some possible implementations of this application, a general structural formula of the polymer material is as follows: 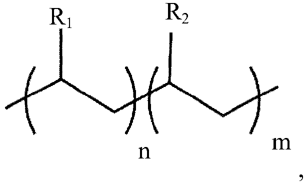 where R₁ is used to be coordination-crosslinked with the Mg²⁺, n>0, and m≥0.

In the foregoing design, in one aspect, R₁ has bonding performance; and in another aspect, R₁ performs a coordination crosslinking reaction with the Mg²⁺, so that the functional layer is crosslinked with the polymer material, thereby increasing binding strength between the functional layer and the polymer material.

In some possible implementations of this application, R₁ includes at least one of a carboxyl group, an amide group, an aromatic acid group, and a sulfonate group.

In the foregoing design, the carboxyl group, the amide group, the aromatic acid group, and the sulfonate group can perform a coordination crosslinking reaction with the Mg²⁺.

In some possible implementations of this application, R₂ is at least one of hydrogen, an alkyl group having 1 to 6 carbon atoms, a nitro group, an alcohol group, an amino group, or a cyano group.

In the foregoing design, R₂ may select a functional group based on a specific component of an electrolyte solution, a specific functional group of R₁, and the like, so as to adjust swelling performance, mechanical performance, processability, and the like of the polymer material. In some possible implementations of this application, n≥m.

In the foregoing design, the polymer material facilitates a coordination crosslinking reaction between R₁ and the Mg²⁺, so as to further increase the binding strength between the separator and the negative electrode plate.

In some possible implementations of this application, 10<n<10000, and 10<m<10000.

In the foregoing design, increasing a molecular weight of the polymer material is conducive to improvement of the bonding performance of the polymer material.

In some possible implementations of this application, the binding strength between the negative electrode plate and the separator is greater than 0.5 N/m.

According to a second aspect, this application further provides a terminal apparatus, where the terminal apparatus includes a battery.

According to a third aspect, this application further provides a method for manufacturing a battery, including the following steps: providing a negative electrode preform, where the negative electrode preform includes a negative active substance layer and a pre-embedded layer that are stacked, where the pre-embedded layer includes Mg and/or Mg²⁺; providing a base film, coating a coating layer on a surface of the base film to form a separator together, where the coating layer includes a polymer material, and bonding the coating layer to the pre-embedded layer; assembling a battery preform, where the battery preform includes the separator and the negative electrode preform; and performing formation on the battery preform, where some of the Mg and/or some of the Mg²⁺ in the pre-embedded layer enter the negative active substance layer, and the polymer material is coordination-crosslinked with at least some of the Mg²⁺ not embedded in the pre-embedded layer and/or Mg²⁺formed by oxidation of at least some of the Mg not embedded in the pre-embedded layer.

In the foregoing design, the pre-embedded layer is disposed in a process of manufacturing a negative electrode plate to improve initial efficiency of a negative electrode. The polymer material in the coating layer has bonding performance and can achieve a bonding effect to some extent. In addition, the pre-embedded layer includes the Mg and/or the Mg²⁺, and the Mg may be converted into the Mg²⁺. The polymer material can perform a coordination crosslinking reaction with the Mg²⁺ to form a functional layer, so as to effectively increase peel strength between the negative electrode plate and the separator, thereby helping prevent deformation of the battery during a cycle process. In addition, after ionization of the polymer material, ionic conductivity performance of the polymer material can be effectively improved.

In some possible implementations of this application, the pre-embedded layer includes at least one of elemental metal, a metal alloy, and a metal compound that are of magnesium.

In the foregoing design, a magnesium-containing material is used to supplement magnesium to the negative electrode plate.

In some possible implementations of this application, an ion-exchange capacity of the polymer material is greater than or equal to 0.2 meq/g.

In the foregoing design, the polymer material has a relatively high coordination capability with the Mg²⁺, so that the polymer material can perform a sufficient coordination crosslinking reaction with the Mg²⁺, thereby increasing binding strength between the separator and the negative electrode plate.

In some possible implementations of this application, a general structural formula of the polymer material is as follows: 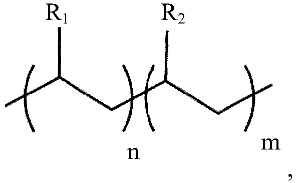 where R₁ is coordination-crosslinked with the Mg²⁺, n>0, and m≥0.

In the foregoing design, R₁ performs a coordination crosslinking reaction with the Mg²⁺, so that the polymer material is crosslinked with the Mg²⁺, thereby increasing the binding strength between the separator and the negative electrode plate.

In some possible implementations of this application, R₁ includes at least one of a carboxyl group, an amide group, an aromatic acid group, and a sulfonate group.

In the foregoing design, the carboxyl group, the amide group, the aromatic acid group, and the sulfonate group can perform a coordination crosslinking reaction with the Mg²⁺.

In some possible implementations of this application, R₂ is at least one of hydrogen, an alkyl group having 1 to 6 carbon atoms, a nitro group, an alcohol group, an amino group, or a cyano group.

In the foregoing design, R₂ is used to improve polarity of the polymer material, so as to improve bonding performance of the polymer material and improve affinity between the polymer material and an electrolyte solution in the battery.

In some possible implementations of this application, n≥m.

The foregoing design facilitates coordination crosslinking between R₁ and the Mg²⁺, so as to further increase the binding strength between the separator and the negative electrode plate.

In some possible implementations of this application, 10<n<10000, and 10<m<10000.

In the foregoing design, increasing a molecular weight of the polymer material is conducive to improvement of the bonding performance of the polymer material.

### BRIEF DESCRIPTION OF DRAWINGS

FIG. 1 is a sectional schematic diagram of a battery according to a related technology of this application;
FIG. 2 is a schematic diagram of a structure of a terminal apparatus being a mobile phone according to an embodiment of this application;
FIG. 3 is a sectional schematic diagram of an electrode assembly with a winding structure according to an embodiment of this application;
FIG. 4 is a sectional schematic diagram of an electrode assembly with a stacked structure according to an embodiment of this application;
FIG. 5 is a sectional schematic diagram of a partial area of a battery according to an embodiment of this application;
FIG. 6 is a schematic diagram of a structure of a battery according to an embodiment of this application;
FIG. 7 is a schematic diagram of a structure of a negative electrode preform according to an embodiment of this application;
FIG. 8 is a schematic diagram of a structure obtained after a surface of the negative electrode preform shown in FIG. 7 is covered with a separator; and
FIG. 9 is a schematic diagram of a structure of a battery obtained after formation is performed on a battery preform.

### Description of main component symbols

terminal apparatus: 200
battery: 100, 100'
electrode assembly: 110
negative electrode plate: 10, 10'
negative current collector: 11, 11'
negative active substance layer: 13, 13'
negative active material: 132
binder: 134
conductive agent: 136
functional layer: 15, 15'
pre-embedded layer: 150, 150'
positive electrode plate: 20, 20'
positive current collector: 21
positive active substance layer: 23
separator: 30, 30'
base film: 31
coating layer: 33
negative electrode preform: 50.

### DESCRIPTION OF EMBODIMENTS

To understand the foregoing objects, features, and advantages of this application more clearly, the following describes this application in detail with reference to accompanying drawings and specific implementations. It should be noted that, if there is no conflict, the implementations of this application and the features in the implementations may be mutually combined. Many specific details are described in the following description, so that this application can be fully understood. The described implementations are merely some rather than all of the implementations of this application.

Unless otherwise specified, all technical and scientific terms used in this specification have meanings the same as those commonly understood by a person skilled in the art of this application. The terms used herein in the specification of this application are merely intended to describe specific implementations but not intended to limit this application. The term "and/or" used herein includes all and any combinations of one or more associated listed items.

In embodiments of this application, for ease of description but not limitation of this application, the term "connection" used in the specification and claims of this application is not limited to a physical or mechanical connection, whether direct or indirect. "Top", "bottom", "above", "below", "left", "right", and the like are only used to indicate a relative position relationship. When an absolute position of a described object changes, the relative position relationship also correspondingly changes.

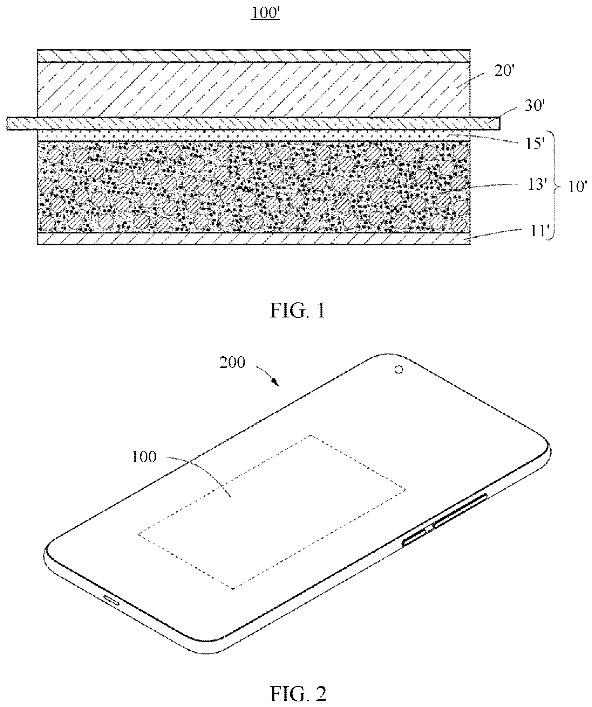

Referring to FIG. 1, a battery 100' is provided in a related technology, and includes a negative electrode plate 10', a positive electrode plate 20', and a separator 30'. The separator 30' is disposed between the negative electrode plate 10' and the positive electrode plate 20'. The separator 30' may be a polyethylene or polypropylene base film, or may be a base film coated with polyvinylidene difluoride (polyvinylidene difluoride, PVDF for short). Before the battery 100' is formed, the negative electrode plate 10' includes a negative current collector 11', a negative active substance layer 13', and a functional layer 15' that are stacked. After formation, some of Mg or Mg²⁺ in the functional layer 15' is embedded in the negative active substance layer 13' to provide Mg²⁺ for the negative active substance layer 13', so as to compensate for some irreversible active lithium, thereby improving initial efficiency of a negative electrode. Compatibility between a remaining substance between the separator 30' and the negative active substance layer 13' and an interface between the separator 30' and/or the negative active substance layer 13' is poor. This leads to a relatively weak bonding force between the negative electrode plate 10' and the separator 30', and the battery 100' is easily deformed in a charging and discharging process.

Referring to FIG. 2, a terminal apparatus 200 including a battery 100 is provided in an embodiment of this application. The battery 100 is an important component of the terminal apparatus 200 such as a mobile phone, a notebook computer, a camera, or a vehicle. Based on a user requirement for lightness, thinness, and long-term endurance of the battery 100, a requirement for energy density and cycle performance of the battery 100 is also increasingly high. Initial efficiency of a negative electrode determines performance of the battery 100 to some extent. In an initial charging process of the battery 100, an electrolyte solution is reduced and decomposed on a surface of a negative active material to form a solid electrolyte interface (Solid Electrolyte Interface, SEI film for short) film. In a process of forming the SEI film, active lithium is consumed, and some of the active lithium is difficult to be de-intercalated and becomes "dead lithium". For some types of negative active materials, such as a silicon material and a tin material, initial efficiency is relatively low. Initial efficiency of the battery 100 including the silicon material is about 70%-85%. In a charging and discharging process, a capacity and energy density of the battery 100 are further reduced. The silicon material has a small particle size and a larger specific surface area, and therefore more active lithium is consumed in the process of forming the SEI film. Electrical conductivity of the silicon material is poor, resulting in that some of the active lithium cannot be de-intercalated.

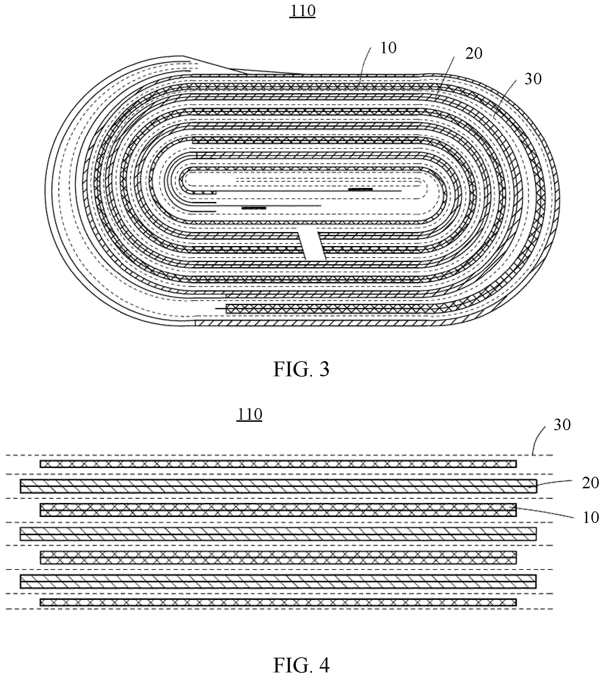

Referring to FIG. 3 and FIG. 4, a battery 100 provided in an embodiment of this application includes an electrode assembly 110, an electrolyte solution (not shown in the figure), and an encapsulation film (not shown in the figure). The electrolyte solution and the electrode assembly 110 are encapsulated in the encapsulation film. The electrode assembly 110 includes a negative electrode plate 10, a positive electrode plate 20, and a separator 30. The separator 30 is located between the positive electrode plate 20 and the negative electrode plate 10. The battery 100 may have a winding structure (refer to FIG. 3). To be specific, the negative electrode plate 10, the separator 30, and the positive electrode plate 20 are stacked and wound to form the electrode assembly 110. The battery 100 may alternatively have a stacked structure (refer to FIG. 4). To be specific, the negative electrode plate 10, the separator 30, and the positive electrode plate 20 are successively stacked to form the electrode assembly 110.

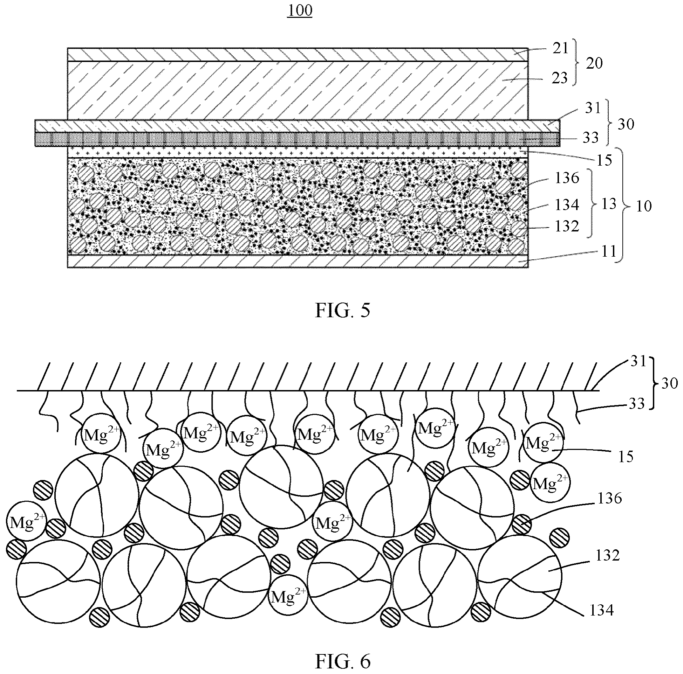

Referring to FIG. 5, the negative electrode plate 10 includes a negative current collector 11, a negative active substance layer 13, and a functional layer 15 that are successively stacked. The negative active substance layer 13 is located on a surface of the negative current collector 11. The functional layer 15 is located on a surface that is of the negative active substance layer 13 and that is away from the negative current collector 11, and the functional layer 15 is located between the separator 30 and the negative active substance layer 13. A material of the negative current collector 11 may be copper foil, nickel foil, or a carbon-based current collector.

The negative active substance layer 13 may include a negative active material 132, a binder 134, and a conductive agent 136. The negative active material 132 may be a silicon material or a tin material. The silicon material has advantages such as a relatively high gram capacity and volume specific capacity, a proper lithium intercalation potential, and low costs. The silicon material may include but is not limited to elemental silicon, a silicon-carbon material, a silicon-oxygen material, and the like. The conductive agent 136 may be graphite, carbon black, a single-wall carbon nanotube, a multi-wall carbon nanotube, a carbon fiber, or the like. The binder 134 may be polyacrylic acid (Polyacrylic acid, PAA for short), styrene-butadiene rubber (Styrene, 1, 3-butadiene polymer, SBR for short), polyvinyl alcohol (polyvinyl alcohol, PVA for short), or the like. A thickness of the negative active substance layer 13 may range from 20 µm to 200 µm.

The positive electrode plate 20 includes a positive current collector 21 and a positive active substance layer 23 that are stacked. The positive current collector 21 may use aluminum foil, nickel foil, or the like. The positive active substance layer 23 includes a positive active material, a binder, and a conductive agent. The positive active material includes a compound (a lithiated intercalation compound) capable of reversibly intercalating and de-intercalating lithium ions. In some embodiments, the positive active material may include a lithium transition metal composite oxide. The lithium transition metal composite oxide includes lithium and at least one element selected from cobalt, manganese, and nickel.

Referring to FIG. 6 together, the separator 30 includes a base film 31 and a coating layer 33 located on a surface of the base film 31. The base film 31 has a porous structure, and a material of the base film 31 may include at least one of polyethylene, polypropylene, polyvinylidene fluoride, polyethylene terephthalate, polyimide, or aramid. For example, the polyethylene includes at least one selected from high-density polyethylene, low-density polyethylene, or ultra-high molecular weight polyethylene.

The functional layer 15 includes Mg²⁺. Some of the Mg²⁺ is embedded in the negative active substance layer 13 to supplement magnesium to the negative electrode plate 10 and the like, so as to compensate for some irreversible active lithium, thereby improving initial efficiency of the battery 100.

The coating layer 33 is located between the negative electrode plate 10 and the base film 31. The coating layer 33 includes a polymer material. The polymer material is coordination-crosslinked with at least some of the remaining Mg²⁺ in the functional layer 15, so as to increase binding strength between the negative electrode plate 10 and the separator 30. Therefore, the coating layer 33 may reduce a risk of a poor interface caused by reduced binding strength between the negative electrode plate 10 and the separator 30 after the functional layer 15 is disposed.

A general structural formula of the polymer material may be as follows: 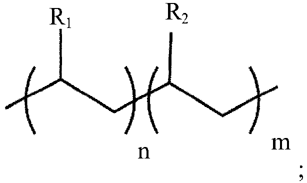 where both m and n are integers, n>0, and m≥0; and when m=0, the general structural formula of the polymer material may be as follows:

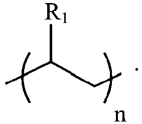

R₁ may be at least one of a carboxyl group (-COOH), an amide group (-CONH₂), an aromatic acid group (-phCOOH), and a sulfonate group (-SO₃H). In one aspect, R₁ has bonding performance; and in another hand, R₁ can perform a coordination crosslinking reaction with the Mg²⁺, so that the polymer material and the functional layer 15 are connected by using a chemical bond, to increase the binding strength between the separator 30 and the negative electrode plate 10.

R₂ may be at least one of hydrogen, an alkyl group having 1 to 6 carbon atoms, a nitro group (-NO₂), an alcohol group (-OH), an amino group (-NH₂), or a cyano group (-CN). R₂ may select a functional group based on a specific component of the electrolyte solution, a specific functional group of R₁, and the like, so as to adjust swelling performance, mechanical performance, processability, and the like of the polymer material. For example, a functional group such as -NO₂, -OH, -NH₂, or -CN may improve polarity of the polymer material, thereby helping improve swelling performance of the polymer material in the electrolyte solution. A group such as hydrogen or an alkyl group having 1 to 6 carbon atoms may reduce brittleness of the polymer material, so as to facilitate processing of the polymer material.

In some embodiments, n≥m, that is, a quantity of R₁ is greater than or equal to a quantity of R₂. This helps more R₁ perform a coordination crosslinking reaction with the Mg²⁺, so as to increase the binding strength between the separator 30 and the negative electrode plate 10.

In some embodiments, 10<n<10000, 10<m<10000, and a molecular weight of the polymer material may range from 1000 to 3000000. Increasing the molecular weight of the polymer material is conducive to improvement of bonding performance of the polymer material.

In some embodiments, when m=0, the polymer material may be polyacrylamide (Polyacrylamide, PAM for short), poly(sodium 4-styrenesulfonate) (poly(sodium 4-styrenesulfonate), PSS for short), or the like. A structural formula of the PAM is 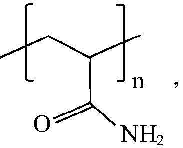 and a structural formula of the PSS is

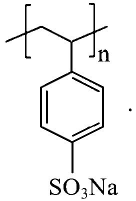

When m>0, the polymer material may be a copolymer. The polymer material may be formed through random copolymerization, or may be formed through block copolymerization. For example, the block copolymerization is used as an example. The polymer material may be a copolymer of the PAA and polyethylene (polyethylene, PE for short), a copolymer of the PAM and polymethyl methacrylate (polymethyl methacrylate, PMMA for short), a copolymer of the PAA and the PMMA, or the like. A structural formula of the copolymer of the PAA and the PE is 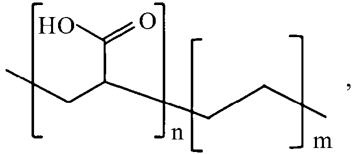 a structural formula of the copolymer of the PAM and the PMMA is 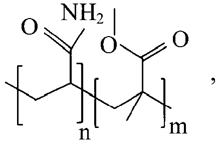 a structural formula of the copolymer of the PAA and the PMMA is 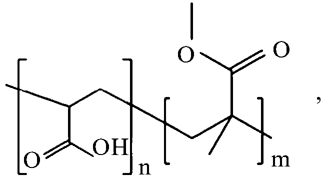 or the like.

In some embodiments, the coating layer 33 may further include a ceramic material, such as alumina or boehmite. The ceramic material is dispersed in the polymer material. The ceramic material may reduce heat shrinkability of the coating layer 33, so as to improve safety of the battery 100.

In some embodiments, the coating layer 33 may alternatively be located on a side that is of the separator 30 and that faces the positive electrode plate 20, so as to bond the separator 30 and the positive electrode plate 20.

In some embodiments, a thickness of the coating layer 33 may range from 0.5 µm to 6 µm, which may be specifically 1 µm, 2.5 µm, 3 µm, 4.5 µm, or the like.

In some embodiments, surface density of the coating layer 33 ranges from 0.15 g/m² to 0.8 g/m².

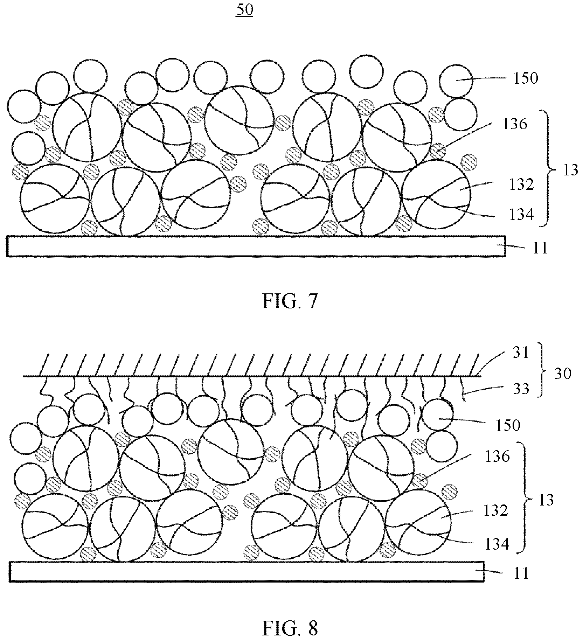

Referring to FIG. 7 to FIG. 9, a method for manufacturing a battery 100 is further provided in some embodiments of this application, which may include the following steps:
Step S1: Referring to FIG. 7, provide a negative electrode preform 50, where the negative electrode preform 50 includes a negative active substance layer 13 and a pre-embedded layer 150 that are stacked.

The negative electrode preform 50 may further include a negative current collector 11. The negative active substance layer 13 is disposed on a surface of the negative current collector 11. The pre-embedded layer 150 is located on a surface that is of the negative active substance layer 13 and that is away from the negative current collector 11.

The pre-embedded layer 150 is used to supplement magnesium, and a material of the pre-embedded layer 150 may be elemental metal, a metal alloy, a metal compound, and/or the like. For example, the material of the pre-embedded layer 150 may be at least one of magnesium metal, a magnesium-aluminum alloy, a magnesium-zinc alloy, a magnesium-tin alloy, a magnesium-manganese alloy, magnesium chloride, and magnesium silicate.

A manner of disposing the pre-embedded layer 150 on the surface of the negative active substance layer 13 includes but is not limited to a roll pressing method, an electroplating method, a vapor deposition method, a magnesiothermic method, and the like. For example, in some embodiments, when a negative electrode plate 10 is manufactured, a binder 134 may be first dissolved in a solvent, and a negative active material 132 and a conductive agent 136 are dispersed in the solvent for fully stirring to form a negative slurry. Then, the negative slurry is coated on the negative current collector 11, and is dried to remove the solvent. The negative active material 132 and the conductive agent 136 are bonded by using the binder 134 to form the negative active substance layer 13. The negative active substance layer 13 is bonded to the negative current collector 11 by using the binder 134. Further, the pre-embedded layer 150 is roll-pressed onto the surface that is of the negative active substance layer 13 and that is away from the negative current collector 11 and then sintered at a low temperature (for example, less than 200°C) to form the negative electrode plate 10. In some embodiments, the pre-embedded layer 150 may alternatively be formed on the surface of the negative active substance layer 13 in an electroplating manner. For example, when the pre-embedded layer 150 is used to supplement magnesium, molten salt of MgCl₂ may be electrolyzed in an electrolytic manner and plated on the surface of the negative active substance layer 13. In some embodiments, magnesium vapor may be vapor deposited in a suspended state onto the surface of the negative active substance layer 13 in a reactor. In some embodiments, the pre-embedded layer 150 is coated on the surface of the negative active substance layer 13 and heated at a low temperature, so that a part of the pre-embedded layer 150 enters the negative active substance layer 13.

Step S2: Referring to FIG. 8, provide a base film 31, where a coating layer 33 is coated on a surface of the base film 31 to form a separator 30 together, and bond the coating layer 33 to the pre-embedded layer 150.

The coating layer 33 may be coated on one surface of the base film 31, or may be coated on two opposite surfaces of the base film 31. When the coating layer 33 is coated on only one surface of the base film 31, the coating layer 33 is located on a side that is of the base film 31 and that faces the negative electrode plate 10.

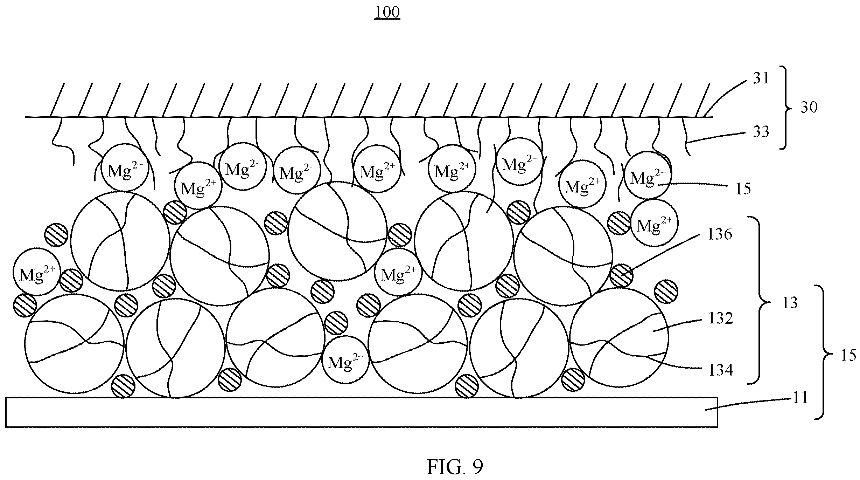

Step S3: Assemble a battery preform (not shown in the figure) with reference to FIG. 9, where the battery preform includes the separator 30 and the negative electrode preform 50.

The battery preform further includes a positive electrode plate, an electrolyte solution, and the like. The negative electrode plate 10 and the positive electrode plate are located on two opposite sides of the separator 30. The electrolyte solution infiltrates the negative electrode plate 10, the positive electrode plate, and the separator 30.

Step S4: Referring to FIG. 9, perform formation on the battery preform, where some Mg and/or some Mg²⁺ in the pre-embedded layer 150 enters the negative active substance layer 13, and a polymer material is coordination-crosslinked with at least some of the Mg²⁺ not embedded in the pre-embedded layer and/or Mg²⁺ formed by oxidation of at least some of the Mg not embedded in the pre-embedded layer 150, to form the battery 100.

In a process of forming the battery 100, the Mg²⁺ performs a coordination crosslinking reaction with R₁ in the polymer material, or the Mg in the pre-embedded layer 150 is converted into Mg²⁺ during formation and then performs a coordination crosslinking reaction with R₁ in the polymer material, which enables the separator 30 to be connected to the negative electrode plate 10 by using a chemical bond. In addition, the polymer material also has a bonding function to bond the separator 30 and the negative electrode plate 10, thereby helping improve interface stability of the negative electrode plate 10 during a cycle process of the battery 100. Moreover, the polymer material performs a coordination crosslinking reaction with the Mg²⁺. To be specific, after ionization of the polymer material, ionic conductivity performance of the polymer material can be improved effectively, so that the polymer material has a better lithium ion transmission dynamics capability. In this way, internal resistance of the battery 100 is reduced, thereby helping improve fast charging performance of the battery 100.

In some embodiments, in a process in which the Mg or the Mg²⁺ is embedded in the negative active substance layer 13, a by-product is generated and loaded on the surface of the negative active substance layer 13, such as magnesium carbonate or lithium silicate. The polymer material may also bond with the by-product and be coordination-crosslinked with Mg²⁺ in the by-product.

An ion-exchange capacity (Ion-Exchange Capacity, IEC) of the polymer material is greater than or equal to 0.2 meq/g, so that the polymer material has a relatively high coordination capability with the Mg²⁺, thereby enabling the polymer material to perform a sufficient coordination crosslinking reaction with the Mg²⁺ provided in the pre-embedded layer 150.

The following describes implementations of this application by using specific embodiments and comparative examples.

### Comparative Example 1

In a negative electrode plate 10, silicon oxide is used as a negative active substance. The negative active substance occupies 10% of a mass fraction of a negative active substance layer 13, and a binder 134 is PAA. A pre-embedded layer 150 is not disposed. A coating layer 33 is disposed on a surface that is of a separator 30 and that faces the negative electrode plate 10, and a polymer material in the coating layer 33 is PVDF.

### Comparative Example 2

Different from Comparative Example 1, a pre-embedded layer 150 is disposed in Comparative Example 2. A material of the pre-embedded layer 150 is magnesium metal, and a thickness of the pre-embedded layer 150 is 3 µm.

### Embodiment 1

Different from Comparative Example 1, a pre-embedded layer 150 is disposed in Embodiment 1. A material of the pre-embedded layer 150 is magnesium metal, and a thickness of the pre-embedded layer 150 is 3 µm. A polymer material in the coating layer 33 is a copolymer of PAA and PE.

### Embodiment 2

In a negative electrode plate 10, silicon oxide is used as a negative active substance. The negative active substance occupies 40% of a mass fraction of a negative active substance layer 13, and a binder 134 is PAA and SBR. A material of a pre-embedded layer 150 is magnesium metal, and a thickness of the pre-embedded layer 150 is 5 µm. A coating layer 33 is disposed on a surface that is of a separator 30 and that faces the negative electrode plate 10, and a polymer material in the coating layer 33 is a copolymer of PAM and PMMA.

### Embodiment 3

In a negative electrode plate 10, silicon oxide is used as a negative active substance. The negative active substance occupies 10% of a mass fraction of a negative active substance layer 13, and a binder 134 is SBR. A material of a pre-embedded layer 150 is magnesium metal, and a thickness of the pre-embedded layer 150 is 5 µm. A coating layer 33 is disposed on a surface that is of a separator 30 and that faces the negative electrode plate 10, and a polymer material in the coating layer 33 is PAM.

### Embodiment 4

In a negative electrode plate 10, silicon carbide is used as a negative active substance. The negative active substance occupies 5% of a mass fraction of a negative active substance layer 13, and a binder 134 is PVA. A material of a pre-embedded layer 150 is magnesium metal, and a thickness of the pre-embedded layer 150 is 2 µm. A coating layer 33 is disposed on a surface that is of a separator 30 and that faces the negative electrode plate 10, and a polymer material in the coating layer 33 is a copolymer of PAM and PMMA.

### Embodiment 5

In a negative electrode plate 10, silicon carbide is used as a negative active substance. The negative active substance occupies 10% of a mass fraction of a negative active substance layer 13, and a binder 134 is PAA and SBR. A material of a pre-embedded layer 150 is magnesium metal, and a thickness of the pre-embedded layer 150 is 3 µm. A coating layer 33 is disposed on a surface that is of a separator 30 and that faces the negative electrode plate 10, and a polymer material in the coating layer 33 is PSS.

Initial efficiency of a negative electrode and peel strength in each embodiment and comparative example are tested, with results recorded in Table 1. Steps of testing the initial efficiency of the negative electrode include: assembling the negative electrode plate, the separator, and a lithium plate in each of Comparative Examples 1-2 and Embodiments 1-5 into a half-cell, and testing a discharge capacity and a charge capacity in the first cycle process of the half-cell, where a ratio of the discharge capacity to the charge capacity is the initial efficiency of the negative electrode plate. During testing, discharge rates are successively 0.04C, 0.02C, and 0.01C, a charge rate is 0.04C, and a voltage is 0 V to 2 V. Steps of testing the peel strength between the negative electrode plate 10 and the separator 30 includes: disassembling the negative electrode plate 10 and the separator 30 that are in a formed battery 100 in each of Comparative Examples 1-2 and Embodiments 1-5, rolling the negative electrode plate 10 and the separator 30 three times with a 1 kg roller, and testing the negative electrode plate 10 and the separator 30 by using a 180° tensile tester. Table 1 shows differing conditions in Comparative Examples 1-2 and Embodiments 1-5 and corresponding test results.

**Table 1**

| Embodiment/ Comparative Example | Active substance | Proportion of the active Substance | Binder | Thickness of a pre-embedded layer | Material of a coating layer | Initial efficiency of a negative electrode | Peel strength |
|---|---|---|---|---|---|---|---|
| Comparative Example 1 | Silicon oxygen | 10% | PAA | / | PVDF | 75% | 0.8 N/m |
| Comparative Example 2 | Silicon oxygen | 10% | PAA | 3 µm | PVDF | 88% | 0.3 N/m |
| Embodiment 1 | Silicon oxygen | 10% | PAA | 3 µm | Copolymer of PAA and PE | 88% | 1 N/m |
| Embodiment 2 | Silicon oxygen | 40% | PAA+SBR | 5 µm | Copolymer of PAM and PMMA | 86% | 2 N/m |
| Embodiment 3 | Silicon oxygen | 10% | SBR | 5 µm | PAM | 90% | 1 N/m |
| Embodiment 4 | Silicon carbon | 5% | PVA | 2 µm | Copolymer of PAA and PMMA | 88% | 2 N/m |
| Embodiment 5 | Silicon carbon | 10% | PAA+SBR | 3 µm | PSS | 90% | 3 N/m |

It can be learned from the test results in Table 1 that, the pre-embedded layer 150 is not disposed in Comparative Example 1, that is, magnesium supplementation is not performed on the battery 100, and the initial efficiency of the negative electrode plate is relatively low. The pre-embedded layer 150 is disposed in Comparative Example 2, and the initial efficiency of the negative electrode plate is improved to a specific extent compared with that in Comparative Example 2. However, in Comparative Example 2, the pre-embedded layer 150 is bonded to the separator 30 by using the PVDF, and the PVDF does not perform a coordination crosslinking reaction with Mg²⁺ to achieve connection by using a chemical bond, resulting in poor bonding performance between the PVDF and the pre-embedded layer 150 that the PVDF is not embedded in. Therefore, the peel strength between the negative electrode plate and the separator is relatively low. In each of Embodiments 1-5, the pre-embedded layer 150 is disposed to supplement magnesium to the negative electrode plate 10, so as to improve the initial efficiency of the negative electrode plate. In addition, the polymer material that can perform a coordination crosslinking reaction with the pre-embedded layer 150 is disposed between the pre-embedded layer 150 and the separator 30, so that the polymer material is connected to Mg²⁺ by using a chemical bond after performing coordination crosslinking. In this way, the peel strength between the negative electrode plate 10 and the separator 30 is effectively increased.

In some embodiments, under a same condition, a test is performed on a full cell 100 equipped with a negative electrode plate without magnesium supplementation and a full cell equipped with a negative electrode plate with magnesium supplementation, no coating layer 33 is disposed in both cases. During testing, discharge rates are successively 0.04C, 0.02C, and 0.01C, a charge rate is 0.04C, and a voltage is 3 V to 4.5 V. Test results are shown in Table 2. It can be learned from the test results that, the initial efficiency of the battery 100 with magnesium supplementation is significantly improved compared to that of the battery 100 without magnesium supplementation.

**Table 2**

| | 0.2C discharge capacity (Ah) | 0.2C discharge platform (V) | Initial efficiency | Gram capacity (mAh/g) | Battery thickness (mm) |
|---|---|---|---|---|---|
| Without magnesium supplementation | 2.67 | 3.79 | 75.3% | 147.3 | 4.40 |
| With magnesium supplementation | 3.08 | 3.74 | 88.0% | 181.2 | 4.59 |

In some embodiments, under a same condition, a test is performed a full cell 100 equipped with a magnesium-supplemented separator 30 without disposing of the coating layer 33 and a full cell 100 equipped with a magnesium-supplemented separator 30 with disposing of the coating layer 33. During testing, discharge rates are successively 0.04C, 0.02C, and 0.01C, a charge rate is 0.04C; and a voltage is 3 V to 4.5 V. Test results are shown in Table 3. It can be learned from the test results that, the cycle lifespan of the battery 100 that is magnesium-supplemented with disposing of the coating layer 33 is significantly prolonged compared to that of the battery 100 that is magnesium-supplemented but without disposing of the coating layer 33.

**Table 3**

| | Cycle lifespan | Thickness increase of the negative electrode pate 10 after 500 cycles | Thickness increase of the battery 100 after 500 cycles |
|---|---|---|---|
| Without a coating layer | Capacity after 500 cycles accounts for 78% of an initial capacity | 61% | 15.0% |
| With a coating layer | Capacity after 720 cycles accounts for 81% of an initial capacity | 62% | 11.2% |

In the embodiments of this application, the pre-embedded layer 150 is disposed in the process of manufacturing the negative electrode plate 10, so as to improve the initial efficiency of the negative electrode. The coating layer 33 is disposed between the pre-embedded layer 150 and the separator 30. The polymer material in the coating layer 33 has bonding performance and can perform a bonding function to some extent. In addition, the pre-embedded layer 150 includes the Mg and/or the Mg²⁺, and the Mg may be converted into Mg²⁺. The polymer material can be connected to the Mg²⁺by using a chemical bond after performing a coordination crosslinking reaction, and then connected to each other by using the chemical bond, so as to effectively increase peel strength between the negative electrode plate 10 and the separator 30, thereby helping prevent deformation of the battery 100 during a cycle process. In addition, after the polymer material is ionized, ionic conductivity performance of the polymer material can be effectively improved.

The foregoing implementations are merely intended to describe the technical solutions of this application, but not intended to constitute any limitation. Although this application is described in detail with reference to the foregoing preferred implementations, a person of ordinary skill in the art should understand that modifications or equivalent replacements can be made to the technical solutions of this application without departing from the spirit and scope of the technical solutions of this application.

## Claims

1. A battery, comprising:
a negative electrode plate, comprising a negative active substance layer and a functional layer that are stacked, wherein the functional layer comprises Mg²⁺, and some of the Mg²⁺ is embedded in the negative active substance layer; and
a separator, comprising a base film and a coating layer located on a surface of the base film, wherein the coating layer bonds the base film and the functional layer, wherein
the coating layer comprises a polymer material, and the polymer material is coordination-crosslinked with at least some of the remaining Mg²⁺ in the functional layer.

2. The battery according to claim 1, wherein a general structural formula of the polymer material is as follows: 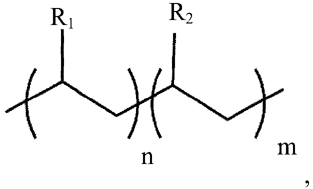 wherein the R₁ is used to be coordination-crosslinked with the Mg²⁺, n>0, and m≥0.

3. The battery according to claim 2, wherein the R₁ comprises at least one of a carboxyl group, an amide group, an aromatic acid group, and a sulfonate group.

4. The battery according to claim 2 or 3, wherein the R₂ is at least one of hydrogen, an alkyl group having 1 to 6 carbon atoms, a nitro group, an alcohol group, an amino group, or a cyano group.

5. The battery according to claim 2 or 3, wherein n≥m.

6. The battery according to claim 2 or 3, wherein 10<n<10000, and 10<m<10000.

7. The battery according to claim 1, wherein binding strength between the negative electrode plate and the separator is greater than 0.5 N/m.

8. A terminal apparatus, comprising the battery according to any one of claims 1 to 7.

9. A method for manufacturing a battery, comprising the following steps:
providing a negative electrode preform, wherein the negative electrode preform comprises a negative active substance layer and a pre-embedded layer that are stacked, and the pre-embedded layer comprises Mg and/or Mg²⁺;
providing a base film, coating a coating layer on a surface of the base film to form a separator together, wherein the coating layer comprises a polymer material, and bonding the coating layer to the pre-embedded layer;
assembling a battery preform, wherein the battery preform comprises the separator and the negative electrode preform; and
performing formation on the battery preform, wherein some of the Mg and/or some of the Mg²⁺ in the pre-embedded layer enter the negative active substance layer, and the polymer material is coordination-crosslinked with at least some of the Mg²⁺ not embedded in the pre-embedded layer and/or Mg²⁺ formed by oxidation of at least some of the Mg not embedded in the pre-embedded layer.

10. The method for manufacturing a battery according to claim 9, wherein the pre-embedded layer comprises at least one of elemental metal, a metal alloy, and a metal compound that are of magnesium.

11. The method for manufacturing a battery according to claim 9, wherein an ion-exchange capacity of the polymer material is greater than or equal to 0.2 meq/g.

12. The method for manufacturing a battery according to claim 9, wherein a general structural formula of the coating layer is as follows: 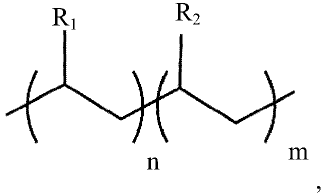 wherein the R₁ is coordination-crosslinked with the Mg²⁺, n>0, and m≥0.

13. The method for manufacturing a battery according to claim 12, wherein the R₁ comprises at least one of a carboxyl group, an amide group, an aromatic acid group, and a sulfonate group.

14. The method for manufacturing a battery according to claim 12 or 13, wherein the R₂ is at least one of hydrogen, an alkyl group having 1 to 6 carbon atoms, a nitro group, an alcohol group, an amino group, or a cyano group.

15. The method for manufacturing a battery according to claim 12 or 13, wherein n≥m.

16. The method for manufacturing a battery according to claim 12 or 13, wherein 10<n<10000, and 10<m<10000.

17. A battery, comprising:
a negative electrode plate, comprising a negative active substance layer and a functional layer that are stacked, wherein the functional layer comprises Mg²⁺, and some of the Mg²⁺ is embedded in the negative active substance layer; and
a separator, comprising a base film and a coating layer located on a surface of the base film, wherein the coating layer bonds the base film and the functional layer, wherein
the coating layer comprises a polymer material, and the polymer material is coordination-crosslinked with at least some of the remaining Mg²⁺ in the functional layer; and
a general structural formula of the polymer material is as follows: 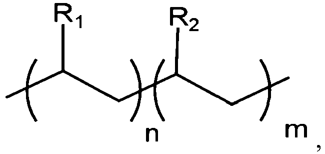
wherein the R₁ is used to be coordination-crosslinked with the Mg²⁺, n>0, and m≥0; and the R₁ comprises at least one of a carboxyl group, an amide group, an aromatic acid group, and a sulfonate group.

18. The battery according to claim 17, wherein the R₂ is at least one of hydrogen, an alkyl group having 1 to 6 carbon atoms, a nitro group, an alcohol group, an amino group, or a cyano group.

19. The battery according to claim 17, wherein n≥m.

20. The battery according to claim 17, wherein 10<n<10000, and 10<m<10000.

21. The battery according to claim 17, wherein binding strength between the negative electrode plate and the separator is greater than 0.5 N/m.
